**Europäisches Patentamt**

**European Patent Office**

**Office européen des brevets**

(11) Numéro de publication : **0 049 796**
**B1**

(12) **FASCICULE DE BREVET EUROPÉEN**

(45) Date de publication du fascicule du brevet :
30.01.85

(51) Int. Cl.⁴ : **B 23 C   5/24**

(21) Numéro de dépôt : **81107678.5**

(22) Date de dépôt : **27.09.81**

(54) **Outil pour usinage à cartouches porte-plaquettes interchangeables.**

(30) Priorité : 09.10.80 CH 7537/80

(43) Date de publication de la demande :
21.04.82 Bulletin 82/16

(45) Mention de la délivrance du brevet :
30.01.85 Bulletin 85/05

(84) Etats contractants désignés :
AT BE CH DE FR GB IT LI LU NL SE

(56) Documents cités :
DE-A- 3 013 876
DE-B- 1 111 368
DE-C-   318 815
FR-A- 1 451 933
FR-A- 1 455 182
FR-A- 2 301 346
GB-A-   119 175
US-A- 1 569 524
US-A- 1 778 260
US-A- 2 415 136
US-A- 3 303 556

(73) Titulaire : **STELLRAM S.A.**
**Route de l'Etraz**
**CH-1260 Nyon, Vaud (CH)**

(72) Inventeur : **Gehri, Hermann**
**La Bossière**
**CH-1197 Prangins, Vaud (CH)**

(74) Mandataire : **Micheli, Michel Pierre et al**
**MICHELI & CIE 118, Rue du Rhône Case Postale 47**
**CH-1211 Genève 6 (CH)**

Jouve, 18, rue St-Denis, 75001 Paris, France

## Description

La présente invention se rapporte à un outil pour usinage à cartouches porte-plaquettes fixées de façon amovible dans des logements que présente le corps de l'outil. On entend ici par outil pour usinage tous genres d'outils à plaquettes de coupe brasées ou amovibles pour l'usinage par enlèvement de copeaux, par exemple des fraises.

On connaît déjà des outils de coupe comportant des couteaux ou lames fixés de façon amovible dans des logements pratiqués dans le corps desdits outils. Le brevet FR-A1 455 182, par exemple, décrit de tels outils dans lesquels la vis de fixation des couteaux agit sur la face frontale de ceux-ci, la force de serrage engendrant ainsi un couple de rotation dans un sens opposé à celui engendré par les efforts de coupe. Ceci conduit à une mauvaise fixation des couteaux dans leurs logements, à des risques de vibrations voire de déplacements des couteaux au cours du travail. Il est également décrit dans le brevet US-A-1 778 260 de 1926 une fraise similaire aux outils précités, mais dans laquelle les lames sont munies à leur extrémité inférieure d'un téton coopérant en position de service avec une rainure pratiquée dans le fond de chaque logement.

De plus, la vis de fixation agit de manière à forcer la lame contre le fond de son logement. Cette solution présente l'inconvénient, en plus de la nécessité d'usiner un téton sur chaque lame et une rainure dans le fond de chaque logement, que la fraise est soumise à des efforts essentiellement axiaux, ce qui n'est pas souhaitable pour assurer une fixation parfaite des lames dans leurs logements.

Le but de cette invention consiste donc à fournir un outil du type précité obviant aux inconvénients précités, qui comporte un système de fixation des cartouches porte-plaquettes interchangeables permettant un blocage efficace de celles-ci dans leurs logements respectifs de telle sorte que l'effort d'usinage s'additionne à l'effort de serrage, et qui soit accessible quelle que soit la position de l'outil de manière à rendre aisé le changement de cartouches.

Le but ci-dessus est obtenu par l'outil pour usinage, objet de cette invention, qui comporte un élément de blocage accessible depuis l'extérieur coopérant avec le corps de l'outil et agissant en position de service sur un plan incliné ménagé transversalement sur la portion médiane d'une face de chaque cartouche, et qui est caractérisé par le fait que ce plan incliné est situé sur la face dorsale de chaque cartouche, opposée à la face frontale portant la plaquette de coupe, et par le fait que les dimensions des logements sont supérieures à celles des cartouches afin que celles-ci soient introduites avec jeu dans lesdits logements, le tout étant agencé de telle sorte que la poussée de haut en bas et d'arrière en avant dudit élément de blocage sur ledit plan incliné fasse pivoter la cartouche et la bloque par coincement dans son logement sur des appuis situés respectivement sur le fond, la paroi dorsale et la paroi frontale de ce logement, et agisse ainsi sur la cartouche dans le même sens que la résultante des efforts de coupe.

Le dessin annexé illustre schématiquement et à titre d'exemples plusieurs formes d'exécution du dispositif de fixation d'une cartouche dans un logement de l'outil selon l'invention.

La figure 1 est une vue en coupe d'un détail illustrant le principe de fonctionnement du blocage sur trois points.

Les figures 2, 3 et 4A sont des vues en coupe de trois variantes de l'élément de fixation, et la figure 4B est une vue de dessus de la variante selon la figure 4A.

Les figures 5A, 5B et 5C sont des vues de trois formes différentes en coupe des cartouches amovibles et des logements de l'outil selon l'invention.

Les figures 6 et 7 sont des vues en coupe illustrant deux variantes du plan incliné que présente la portion dorsale de la cartouche.

Les figures 8, 9 et 10 sont des vues en coupe montrant trois possibilités d'appui latéral fixe de la cartouche, alors que

les figures 11, 12, 13 et 14 sont des vues en coupe montrant quatre variantes de l'appui latéral de la cartouche avec butée réglable.

Les figures 15 à 17 sont des vues en coupe de trois autres variantes de cartouches amovibles dans leur logement.

La figure 18 est une vue de dessus d'une forme d'exécution d'une cartouche amovible de section circulaire dans son logement correspondant, et la figure 19 est une vue en coupe selon la ligne I-I de la figure 18.

Comme indiqué précédemment, les figures annexées ne représentent qu'une portion d'un outil, plus particulièrement une cartouche à plaquette de coupe brasée ou amovible en position de service dans son logement correspondant aménagé dans le corps dudit outil. Celui-ci peut être n'importe quel type d'outil pour l'usinage par enlèvement de copeaux, par exemple un outil de fraisage.

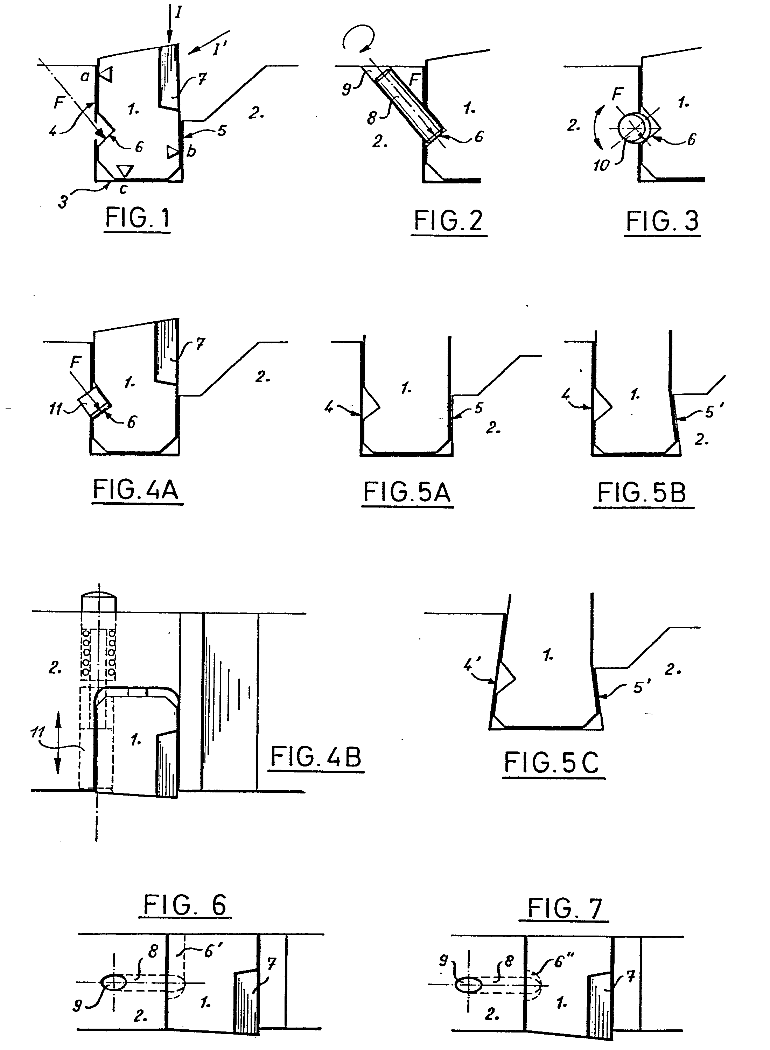

Comme illustré sur la figure 1, le logement destiné à recevoir de façon amovible la cartouche 1 et pratiqué dans le corps 2 de l'outil présente au moins trois faces, à savoir un fond 3, une paroi dorsale 4 et une paroi frontale 5. La cartouche 1, dont la forme générale en coupe correspond à celle du logement, présente sur sa face dorsale un plan incliné 6 sur lequel agit un élément de blocage (non montré sur la figure 1) coopérant également avec le corps 2 de l'outil et orienté de telle sorte que la poussée soit donnée selon la flèche F en direction du fond 3 et d'arrière en avant. Par cette action de poussée orientée selon F, la cartouche 1, dont les dimensions externes sont telles qu'elle peut être introduite avec jeu dans le logement du corps 1, décrit du fait de l'orientation de cette poussée un léger pivotement qui aboutit à un effet de pincement et à son blocage sur trois appuis, en plus du point de poussée sur son plan incliné 6. Ces trois appuis sont représentés en coupe par le point a à proximité de l'extrémité supérieure de la paroi dorsale 4, le point b à proximité de l'extrémité inférieure de la paroi frontale 5 et le point c situé sur le fond 3 du logement. Chaque appui est donc constitué ici par une ligne transversale située sur les parois respectives.

Grâce au blocage tel qu'il est décrit ci-dessus dans son principe général, les efforts de coupe engendrés par l'outil en travail (représentés par les flèches I et I') au niveau de la plaquette de coupe 7, fixée sur la face frontale de la cartouche, tendent à augmenter l'assise de la cartouche dans son logement sur les mêmes appuis précités en s'additionnant à l'effort de serrage F. Ainsi que cela sera décrit plus loin, la cartouche est en outre latéralement en butée contre un organe fixe ou réglable.

Comme élément de blocage, on peut utiliser une vis 8 (figure 2), ou plusieurs vis selon la largeur de la cartouche 1, agissant directement sur le plan incliné 6 et coopérant avec un taraudage 9 pratiqué dans le corps 1 de l'outil selon l'orientation de la forme F, la vis étant donc accessibles depuis le dessus du corps 1.

L'élément de blocage peut également être constitué par un excentrique 10 (figure 3) ou par une clavette conique 11 (figures 4A et 4B), ces éléments ayant leur axe longitudinal perpendiculaire à celui de la cartouche 1, mais agissant sur le plan incliné 6 de celle-ci de la même manière que la vis 8, c'est-à-dire en exerçant une poussée selon la force F tendant à bloquer ladite cartouche 1 sur trois appuis dans son logement. L'excentrique 10 respectivement la clavette conique 11 sont donc accessibles latéralement par rapport à l'outil.

Bien entendu, l'élément de blocage peut présenter encore d'autres formes, et agir soit directement sur le plan incliné de la cartouche, soit par l'intermédiaire d'une bille, d'un cylindre, d'un coin, etc.

Les figures 5A, 5B et 5C illustrent trois exemples de formes différentes des parois respectivement frontale 5 et dorsale 4 du logement du corps 2 de l'outil et des parois correspondantes de la cartouche 1. Les deux parois 4, 5 peuvent être parallèles (figure 5A), ou bien l'une des parois 5' peut être conique (figure 5B), ou bien encore les deux parois 4', 5' peuvent être coniques (figure 5C).

Le plan incliné 6' au dos de la cartouche 1 sur lequel vient s'appuyer l'élément de blocage peut être débouchant d'un côté (face latérale) de la cartouche (figure 6) ce qui permet de libérer cette dernière par coulissement en débloquant la vis 8 par rotation de moins de 1/4 de tour. Cette variante est plus particulièrement utile par exemple dans le cas d'une fraise à grand nombre de dents où l'interchangeabilité des cartouches n'est pas aisée.

Le plan incliné 6'' peut également être non débouchant (figure 7) ce qui nécessite plusieurs tours de vis pour libérer la cartouche 1. Cette variante est donc utilisable dans les cas où il n'est pas nécessaire de changer fréquemment la cartouche 1.

Le logement aménagé dans le corps de l'outil et destiné à recevoir la cartouche porte-plaquettes peut être traversant, et par là plus facile à usiner, par exemple dans le cas de fraises-disques ou fraises à surfacer à couronne amovible. Le logement peut être non traversant (borgne) par exemple dans le cas de fraises à surfacer conventionnelles (monobloc).

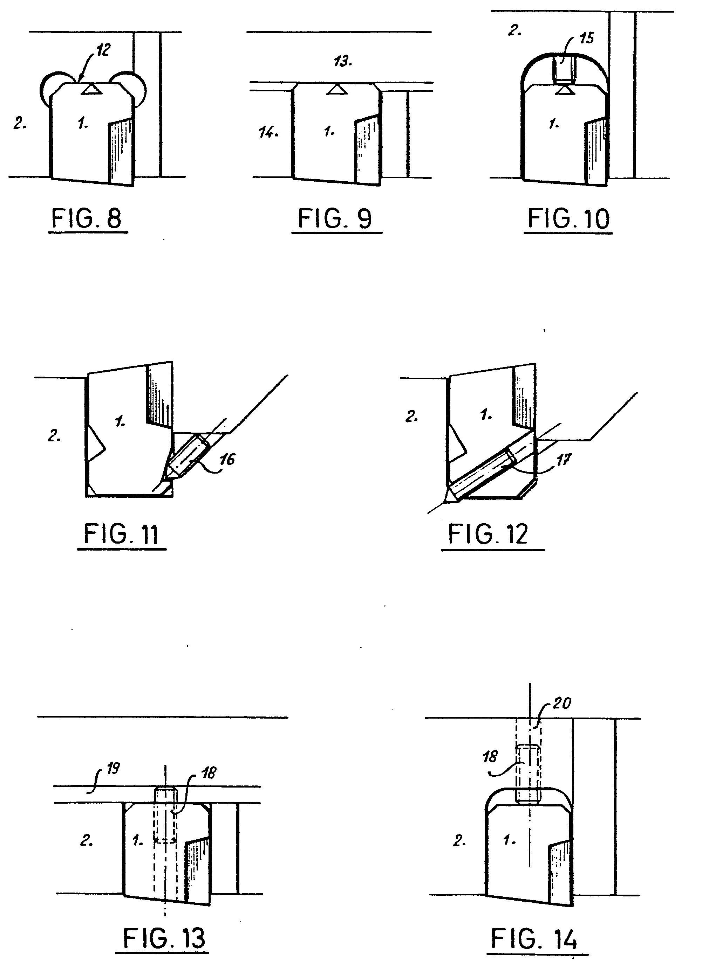

Dans leur logement, les cartouches porte-plaquettes sont en outre en appui latéral soit fixe soit réglable. Sur les figures 8 à 10 sont illustrées trois variantes avec appui fixe respectivement contre le flanc 12 d'une rainure non traversante (figure 8) contre le support 13 d'une fraise à couronne amovible 14 (figure 9) ou contre un organe rapporté fixe 15 (figure 10).

Les cartouches peuvent donc également être en appui réglable par l'intermédiaire d'une vis-butée accessible depuis l'extérieur, cette vis-butée de réglage pouvant être disposée dans le corps de l'outil (figures 11 et 14) ou dans la cartouche elle-même (figures 12 et 13).

La vis-butée de réglage peut bien entendu présenter plusieurs formes différentes. Par exemple une vis-pointeau 16 positionnée dans le corps 2 de l'outil et agissant sur la face frontale de la cartouche 1 présentant une empreinte conique excentrée par rapport à l'axe de la vis (figure 11), ou bien une vis-pointeau 17 traversant la cartouche 1 et agissant également sur une empreinte conique excentrée par rapport à l'axe de la vis et pratiquée dans la face dorsale 4 du logement du corps 2 de l'outil (figure 12).

La vis-butée réglable peut être également une vis à bout plat 18 positionnée latéralement dans la cartouche 1 (figure 13) et agissant contre le côté d'une rainure non traversante 19, ou bien contre le support d'une fraise à couronne amovible ou contre tout élément rapporté. Une même vis à bout plat 18 peut être également positionnée dans un taraudage transversal 20 pratiqué dans le corps 2 de l'outil et agit contre la paroi latérale de la cartouche 1 (figure 14).

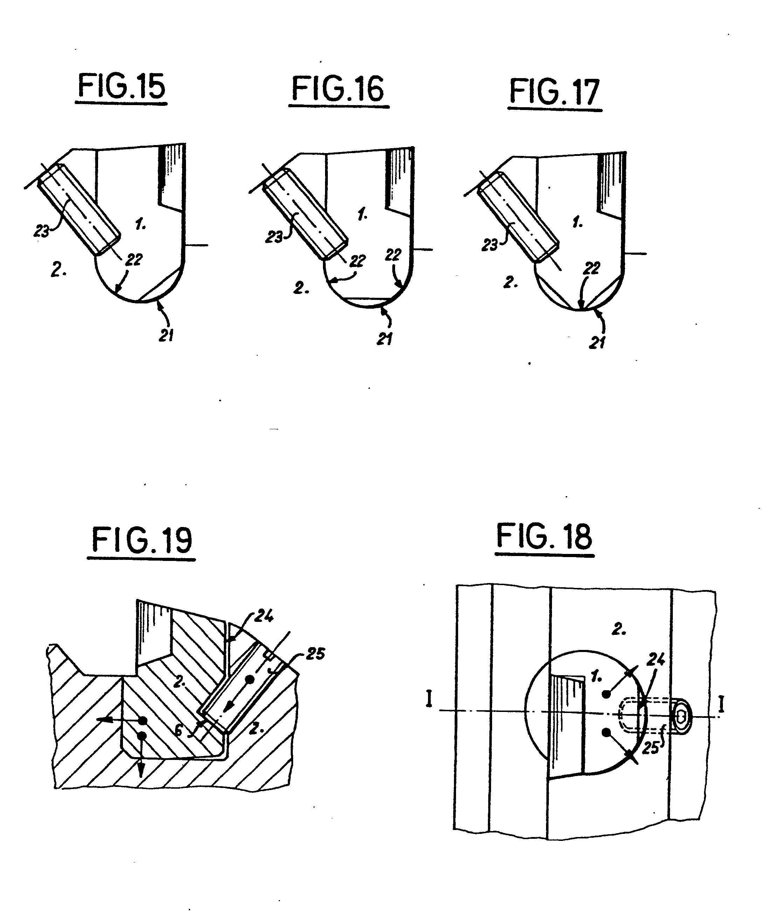

Dans les variantes illustrées sur les figures 15 à 17, la gorge pratiquée dans le corps 2 de l'outil et servant de logement pour recevoir la cartouche porte-plaquette 1 présente un fond 21 arrondi. La cartouche 1 présente alors également à son extrémité inférieure une (figures 15 et 17) ou deux (figure 16) portions arrondies 22 de courbure correspondante à celle du fond 21. Le mouvement de pivotement provoqué par la poussée excercée par l'élément de blocage 23 est facilité dans ces variantes du fait de la présence des surfaces arrondies. Bien entendu, l'élément de blocage 23 peut être choisi notamment parmi ceux décrits en référence aux formes d'exécution précédentes.

Enfin, dans la forme d'exécution illustrée sur les figures 18 et 19, la cartouche porte-plaquette 1 et le logement pratiqué dans le corps 2 de l'outil sont de section circulaire. De plus, la face dorsale de la cartouche 1 présente un aplat longitudinal 24 dans lequel est pratiqué le plan incliné 6 destiné à recevoir la poussée de l'élément de blocage 25, ce dernier pouvant présenter également toutes les formes déjà décrites. Dans cette forme d'exécution, l'appui de la face dorsale de la cartouche contre la paroi du logement est en fait divisé en deux appuis agissant de chaque côté de l'aplat 24, comme illustré par des flèches sur la figure 18.

Dans toutes les variantes, la vis-butée de réglage est toujours directement accessible depuis l'extérieur de l'outil, par un trou aménagé à travers la cartouche respectivement à travers le corps de l'outil.

Le système de fixation des cartouches porte-plaquettes dans des logements aménagés dans le corps de l'outil selon l'invention offre les avantages suivants :

— l'effort d'usinage, par exemple de coupe, s'additionne à l'effort de serrage, ce qui permet un blocage efficace sur trois appuis ;

— il est d'un encombrement réduit et par conséquent il est adaptable à des outils de faibles dimensions, il permet un nombre de tranchants élevé (pas réduit), il ne forme pas d'entrave à un dimensionnement optimum de la chambre à copeaux et il laisse un grand choix de possibilités en combinaison avec un système de butée à réglage fin accessible en toutes circonstances ;

— l'élément de blocage ne traversant pas la cartouche, celle-ci peut être libérée sans nécessiter le retrait complet dudit élément ; selon l'exécution, le montage et le démontage des cartouches est très rapide, un quart de tour à l'élément de blocage étant suffisant ;

— l'élément de blocage est toujours accessible aisément depuis l'extérieur de l'outil et le changement de cartouche est ainsi facile, même avec un outil monté sur une machine ;

— il est adaptable à des outils de coupe, notamment de fraisage, à des fraises-disque, à des fraises à surfacer à grand nombre de dents, à tous genres d'outils spéciaux multi-tranchants, voire mono-tranchant, etc.

## Revendications

1. Outil pour usinage à cartouches (1) porte-plaquettes fixées de façon amovible dans des logements aménagés dans le corps (2) dudit outil et comportant un élément de blocage (8, 10, 11, 25) accessible depuis l'extérieur coopérant avec le corps de l'outil et agissant en position de service sur un plan incliné (6) ménagé transversalement sur la portion médiane d'une face de chaque cartouche, caractérisé par le fait que ce plan incliné est situé sur la face dorsale de chaque cartouche, opposée à la face frontale portant la plaquette de coupe (7), et par le fait que les dimensions des logements sont supérieures à celles des cartouches afin que celles-ci soient introduites avec jeu dans lesdits logements, le tout étant agencé de telle sorte que la poussée (F) de haut en bas et d'arrière en avant dudit élément de blocage sur ledit plan incliné fasse pivoter la cartouche et la bloque par coincement dans son logement sur des appuis situés respectivement sur le fond (3), la paroi dorsale (4) et la paroi frontale (5) de ce logement, et agisse ainsi sur la cartouche dans le même sens que la résultante des efforts de coupe.

2. Outil selon la revendication 1, caractérisé par le fait que l'élément de blocage est une vis (8) coopérant avec un taraudage (9) pratiqué dans le corps (2) de l'outil de manière inclinée de haut en bas et d'arrière en avant, et dont l'extrémité inférieure débouche par la paroi dorsale (4) du logement à proximité du plan incliné (6) de la cartouche (1) disposée dans ce logement.

3. Outil selon la revendication 1, caractérisé par le fait que la plan incliné débouche latéralement au moins d'un côté de la cartouche.

4. Outil selon la revendication 3, caractérisé par le fait que l'élément de blocage est un excentrique (10) ou une clavette conique (11) dont l'axe longitudinal est parallèle à celui du plan incliné (6) pratiqué transversalement sur la face dorsale de la cartouche (1).

5. Outil selon l'une des revendications 1 à 4, caractérisé par le fait que la cartouche est en appui latéralement contre une butée fixe (12, 13, 15).

6. Outil selon l'une des revendications 1 à 4, caractérisé par le fait que la cartouche est en appui latéralement contre une butée réglable.

7. Outil selon la revendication 6, caractérisé par le fait que la butée réglable est une vis-pointeau (16) traversant le corps de l'outil et agissant sur une empreinte conique excentrée par rapport à l'axe de la vis et située dans la paroi frontale de la cartouche, ou une vis-pointeau (17) traversant la cartouche et agissant sur une empreinte conique excentrée par rapport à l'axe de la vis et située dans la face dorsale du logement.

8. Outil selon la revendication 6, caractérisé par le fait que la butée réglable est une vis à bout plat (18) traversant la cartouche et agissant latéralement contre une portion fixe (19) du corps de l'outil, ou une vis à bout plat traversant latéralement le corps de l'outil et agissant contre une paroi latérale de la cartouche.

## Claims

1. Machining tool with insert-holding cartridges (1) removably fixed in housings made in the body (2) of said tool and comprising blocking means (8, 10, 11, 25) accessible from the outside and cooperating with the body of the tool and bearing upon an inclined plane (6) transversely provided on the middle portion of one face of each cartridge, characterized by the fact that this inclined plane is situated on the back side of each cartridge opposed to the front side carrying the cutting insert (7) and by the fact that the sizes of the housings are greater than those of the cartridges so that these latter can be introduced with clearance in said housings, the whole being arranged in such a manner that the pressure (F) downward and forward of said blocking means onto said inclined plane pivotes the cartridge and locks it by wedging in its housing on at least three bearings situated respectively on the bottom (3), the back side (4) and the front side (5) of said housing, and acts therefore on the cartridge in the same direction as the resultant of the cutting stresses.

2. Tool according to claim 1, characterized by the fact that the blocking element is a screw (8) cooperating with a screwing (9) made in the body (2) of the tool toward the bottom and forward, and the lower end of which is opened on the back side (4) of the housing near the inclined plane (6) of the cartridge (1) disposed in this housing.

3. Tool according to claim 1, characterized by the fact that the inclined plane is laterally opened at least on a side of the cartridge.

4. Tool according to claim 3, characterized by the fact that the blocking element is an eccentric (10) or a conical key (11), the longitudinal axis thereof is parallel to that of the inclined plane (6) transversely situated on the back side of the cartridge (1).

5. Tool according to one of claims 1 to 4, characterized by the fact that the cartridge is laterally bearing against a fixed stop (12, 13, 15).

6. Tool according to one of claims 1 to 4, characterized by the fact that the cartridge is laterally bearing against and adjustable stop.

7. Tool according to claim 6, characterized by the fact that the adjustable stop is a centre punch screw (16) traversing the body of the tool and acting on a conical recess offset with regards to the axis of the screw and situated in the front side of the cartridge, or a centre punch screw (17) traversing the cartridge and acting on a conical recess offset with regards to the axis of the screw and situated in the back side of the housing.

8. Tool according to claim 6, characterized by the fact that the adjustable stop is a flat ended screw (18) traversing the cartridge and laterally acting against a fixed portion (19) of the body of the tool, or a flat ended screw laterally traversing the body of the tool and acting against a lateral side of the cartridge.

**Ansprüche**

1. Bearbeitungswerkzeug mit auswechselbaren Plättchenhaltern (1), die in am Werkzeugkörper (2) vorgesehenen Sitzen lösbar befestigt sind und ein Einspannelement (8, 10, 11, 25) aufweisen, das von außen zugänglich ist, mit dem Werkzeugkörper zusammenwirkt und in der Arbeitsstellung an einer schrägen Ebene (6) angreift, die in der Querrichtung im mittleren Abschnitt einer Seite jedes Halters ausgebildet ist, dadurch gekennzeichnet, daß diese schräge Ebene auf der Hinterseite jedes Halters angeordnet ist, entgegengesetzt zu der das Schneidplättchen (7) tragenden Vorderseite, und daß die Abmessungen der Sitze größer als jene der Halter sind, damit diese mit Spiel in die Sitze eingeführt werden können, wobei die Anordnung so getroffen ist, daß der von oben nach unten und von hinten nach vorne auf die schräge Ebene ausgeübte Druck (F) des Einspannelementes ein Schwenken des Halters bewirkt und ihn in seinem Sitz durch Andrücken an am Boden (3), an der Hinterwand (4) und an der Vorderwand (5) dieses Sitzes vorgesehenen Auflagen festklemmt und so auf den Halter in dem gleichen Sinn wie die Resultierende der Schnittkräfte einwirkt.

2. Werkzeug nach Anspruch 1, dadruch gekennzeichnet, daß das Einspannelement eine Schraube (8) ist, die mit einem Innengewinde (9) zusammenwirkt, das im Werkzeugkörper (2) ausgebildet und von oben nach unten und von hinten nach vorne geneigt ist und dessen unteres Ende aus der Hinterwand (4) des Sitzes nahe der schrägen Ebene (6) des im Sitz angeordneten Halters (1) austritt.

3. Werkzeug nach Anspruch 1, dadurch gekennzeichnet, daß die schräge Ebene seitlich auf zumindest einer Seite des Halters austritt.

4. Werkzeug nach Anspruch 3, dadurch gekennzeichnet, daß das Einspannelement ein Exzenter (10) oder ein konischer Keil (11) ist, dessen Längsachse parallel zu jener der schrägen Ebene (6) verläuft, die in der Querrichtung auf der Hinterseite des Halters (1) ausgebildet ist.

5. Werkzeug nach einem der Ansprüche 1 bis 4, dadurch gekennzeichnet, daß der Halter seitlich an einem feststehenden Anschlag (12, 13, 15) anliegt.

6. Werkzeug nach einem der Ansprüche 1 bis 4, dadurch gekennzeichnet, daß der Halter seitlich an einem einstellbaren Anschlag anliegt.

7. Werkzeug nach Anspruch 6, dadurch gekennzeichnet, daß der einstellbare Anschlag eine Stellschraube (16) ist, welche den Werkzeugkörper durchsetzt und in eine konische Vertiefung eingreift, die bezüglich der Achse der Schraube exzentrisch und auf der Vorderwand des Halters gelegen ist, oder eine Stellschraube (17), welche den Halter durchsetzt und in eine konische Vertiefung eingreift, die exzentrisch zur Achse der Schraube und auf der Hinterseite des Sitzes gelegen ist.

8. Werkzeug nach Anspruch 6, dadurch gekennzeichnet, daß der einstellbare Anschlag eine Flachkopfschraube (18) ist, welche den Halter durchsetzt und seitlich an einem feststehenden Teil (19) des Werkzeugkörpers angreift, oder eine Flachkopfschraube, welche den Werkzeugkörper seitlich durchsetzt und an einer Seitenwand des Halters angreift.

**FIG. 1**

**FIG. 2**

**FIG. 3**

**FIG. 4A**

**FIG. 5A**

**FIG. 5B**

**FIG. 4B**

**FIG. 5 C**

**FIG. 6**

**FIG. 7**

FIG. 8

FIG. 9

FIG. 10

FIG. 11

FIG. 12

FIG. 13

FIG. 14

# FIG.15

# FIG.16

# FIG.17

# FIG.19

# FIG.18